# EUROPÄISCHE PATENTSCHRIFT

(11) **EP 3 406 021 B1**
(45) Veröffentlichungstag und Bekanntmachung des Hinweises auf die Patenterteilung: **31.08.2022**
(21) Anmeldenummer: 17700548.5
(22) Anmeldetag: 18.01.2017
(51) Int. Cl.: H02K 21/16, H02K 21/22, H02K 3/04

(54) **ELEKTRISCHE MASCHINE**
ELECTRICAL MACHINE
MACHINE ÉLECTRIQUE

(30) Priorität: 18.01.2016 DE 102016100744
(43) Veröffentlichungstag der Anmeldung: 28.11.2018
(73) Patentinhaber: Otto-von-Guericke-Universität Magdeburg, 39106 Magdeburg (DE)
(72) Erfinder: KASPER, Roland, 39326 Samswegen (DE); BORCHARDT, Norman, 23564 Lübeck (DE)
(74) Vertreter: Einsel, Martin
(86) Internationale Anmeldenummer: PCT/EP2017/050949
(87) Internationale Veröffentlichungsnummer: WO 2017/125416

(56) Entgegenhaltungen:
- EP-A1- 0 668 651
- DE-A1- 19 530 918
- JP-A- H1 141 870
- JP-A- H10 164 788

## Beschreibung

Die Erfindung betrifft eine elektrische Maschine mit einem Primärteil, mit einem Sekundärteil, mit einem Luftspalt zwischen dem Primärteil und dem Sekundärteil, mit einer Luftspaltwickelung im Luftspalt, die zumindest zwei Phasen umfasst und direkt auf einem Eisenkern des Primärteils angeordnet ist, mit magnetischen Polen, die alternierend auf einem Eisenkern des Sekundärteils angeordnet sind, mit einem lokalen magnetischen Kreis, der sich jeweils über einem Paar der magnetischen Pole, dem Eisenkern im Sekundärteil, zweimal dem Luftspalt zwischen den beiden Magneten des Paares der magnetischen Pole und dem Eisenkern im Primärteil bildet, wobei die Luftspaltwicklung derart zu den magnetischen Polen angeordnet ist, dass für jeden magnetischen Pol und für jede Phase jeweils ein Wicklungsstrang im Luftspalt liegt und zwar senkrecht zu einer magnetischen Flussdichte im Luftspalt und auch senkrecht zu einer Bewegungsrichtung, wobei parallel zueinander laufende direkt benachbarte Wicklungsstränge einer Phase der Luftspaltwicklung im Luftspalt durch beidseitig alternierende Kopfstücke zu je einem Leiter verbunden werden.

Elektrische Maschinen, beispielsweise in der Form von Elektromotoren, sind vielfach bekannt und erfreuen sich einer ständig steigenden Nutzung in vielen Anwendungsbereichen. Eine Reihe von Vorschlägen für derartige elektrische Maschinen sind bereits konzipiert worden.

Bereits in der DE 58011 A wird eine Ankeranordnung für elektrische Maschinen beschrieben. Der als Anker bezeichnete Rotor weist Nuten auf. Einige Wicklungsstränge sind nun in den Nuten angeordnet, während andere Wicklungsstränge über die Oberfläche des so bezeichneten Ankers gelegt sind. Dadurch wird ein größerer Wickelraum für die Wicklung geschaffen.

Ferner wird etwa in der DE 34 33 695 C2 ein Elektromotor offenbart, der einen Stator und einen Rotor aufweist. Der Stator als Primärteil ist mit einer Wicklung mit zwei Phasen versehen. Der Rotor als Sekundärteil ist mit magnetischen Polen ausgestattet, die alternierend angeordnet sind.

Aus der DE 195 30 918 A1 ist ein Motor mit gegeneinander bewegbaren Motorteilen bekannt. Das erste Motorteil bildet in einem Luftspalt mittels eines Permanentmagneten mit Magnetpolen ein mehrpoliges Erregerfeld. Das zweite Motorteil ist ein Joch mit einer Anzahl in Richtung auf den Luftspalt vorstehenden Polzähnen, die mit Erregerspulen umwickelt und durch Pollücken getrennt sind. In der EP 0 668 651 A1 wird eine Leistungsspeichervorrichtung vom Flügelradtyp beschrieben. Diese weist eine drehende elektrische Maschine vom kernlosen Typ auf. Die Maschine besitzt einen Stator, der mit einer Statorwicklung mit einem zylindrischen Abschnitt versehen ist, und einen Rotor mit inneren und äußeren Feldelementen, welche zwischen sich eine Feldlücke aufbauen, in welcher der zylindrische Abschnitt positioniert ist. Zwischen dem Stator und dem Rotor ist ein Lager vorgesehen, um eine Unterstützung für den Rotor schwenkbar und drehbar gegen den Stator zu schaffen. Auf der Außenseite der äußeren Feldelemente ist ein Flügelrad befestigt.

Ein weiterer Vorschlag für einen Elektromotor ist aus der JP-H10-164788 A und in leicht modifizierter Form aus der JP-H11-41870 A bekannt. Die dort beschriebene elektrische Maschine besitzt ein Primärteil mit einem ersten Eisenkern und ein Sekundärteil mit einem zweiten Eisenkern. Zwischen dem Primärteil und dem Sekundärteil ist ein Luftspalt vorgesehen. Eine Luftspaltwicklung ist im Luftspalt angeordnet, die zumindest zwei Phasen umfasst und direkt auf dem ersten Eisenkern des Primärteils angeordnet ist. Magnetische Pole sind alternierend auf dem zweiten Eisenkern des Sekundärteils angeordnet. Ein lokaler magnetischer Kreis bildet sich jeweils über einem Paar der magnetischen Pole und weiteren Elementen des Elektromotors. Die elektrische Maschine hat konzentrische Wicklungen. Weder die Luftspaltwicklung noch die Wicklung im Eisenkern ist mäanderförmig. Die Leiter sind nicht durch beidseitig alternierende Kopfstücke verbunden.

Als besonders effektiv und vorteilhaft hat sich ein in der DE 10 2011 111 352 B4 beschriebener Elektromotor herausgestellt. Er umfasst ein als Stator ausgebildetes Primärteil mit einer Wicklungseinrichtung mit mindestens zwei Phasen. Ein Sekundärteil besitzt eine gerade Anzahl an magnetischen Polen, die alternierend auf dem Sekundärteil angeordnet sind. Eine Wicklungseinrichtung ist in einem Luftspalt zwischen dem Primärteil und dem Sekundärteil angeordnet. Die Wicklungseinrichtung weist mindestens zwei Wicklungsstränge und zumindest ein elektrisches Verbindungselement auf. Wicklungsstränge sind mittels der elektrischen Verbindungselemente auf dem Primärteil befestigt.

Auf jede stromdurchflossene Phase wirkt das Magnetfeld im Luftspalt und erzeugt eine Lorentzkraft.

Durch die im Luftspalt liegende direkt auf dem Stator befestigte Wicklung, die insbesondere mäanderförmig ist, entstehen eine Reihe von Vorteilen. Gleichwohl besteht der Wunsch, noch zusätzliche Verbesserungen an derartigen elektrischen Maschinen vorzuschlagen.

Aufgabe der Erfindung ist es, eine elektrische Maschine vorzuschlagen, die weitere Möglichkeiten verglichen mit der gattungsgemäßen elektrischen Maschine aufweist.

Diese Aufgabe wird mittels der im unabhängigen Anspruch 1 definierten Erfindung dadurch gelöst, dass eine elektrische Maschine zur Verfügung gestellt wird, mit einem Primärteil mit einem ersten Eisenkern, mit einem Sekundärteil mit einem zweiten Eisenkern, mit einem Luftspalt zwischen dem Primärteil und dem Sekundärteil, mit einer Luftspaltwickelung im Luftspalt, die zumindest zwei Phasen umfasst und direkt auf dem ersten Eisenkern des Primärteils angeordnet ist, mit magnetischen Polen, die alternierend auf dem zweiten Eisenkern des Sekundärteils angeordnet sind, mit jeweils einem lokalen magnetischen Kreis, der sich jeweils über einem Paar der magnetischen Pole, dem Eisenkern im Sekundärteil, zweimal dem Luftspalt zwischen den beiden Magneten des Paares der magnetischen Pole und dem Eisenkern im Primärteil bildet, wobei die Luftspaltwicklung derart zu den magnetischen Polen angeordnet ist, dass für jeden magnetischen Pol und für jede Phase jeweils ein Wicklungsstrang im Luftspalt liegt und zwar senkrecht zu einer magnetischen Flussdichte im Luftspalt und auch senkrecht zu einer Bewegungsrichtung des Sekundärteils, wobei parallel zueinander laufende direkt benachbarte Wicklungsstränge einer Phase der Luftspaltwicklung im Luftspalt durch beidseitig alternierende Kopfstücke zu je einem Leiter verbunden werden, wobei die Kopfstücke derart mit den Wicklungssträngen in Verbindung stehen, dass sie wechselseitig in Mäanderform angeordnet sind, wobei das Primärteil zusätzlich mit einer Nutenwicklung versehen ist, dass die Nutenwicklung zumindest zwei Phasen umfasst und in Nuten des Eisenkerns des Primärteils angeordnet ist, dass die Nutenwicklung derart zu den magnetischen Polen angeordnet ist, dass für die Nutenwicklung für jeden magnetischen Pol und für jede Phase jeweils ein Wicklungsstrang parallel zum Wicklungsstrang der gleichen magnetischen Pol zugeordneten Luftspaltwicklung in der Nut liegt, dass parallel zueinander laufende direkt benachbarte Wicklungsstränge einer Phase der Nutenwicklung in einer Nut durch beidseitig alternierende Kopfstücke zu je einem Leiter verbunden werden, wobei die Kopfstücke derart mit den Wicklungssträngen in Verbindung stehen, dass sie wechselseitig in Mäanderform angeordnet sind, und wobei die Wicklungsstränge der ersten Phase der Luftspaltwicklung und die Wicklungsstränge der ersten Phase der Nutenwicklung einen durch die Phasenzahlen bestimmten Positionsversatz zueinander aufweisen und die Luftspaltwicklung und die Nutenwicklung durch eine wechselseitig auf die Position des magnetischen Poles synchronisierte Ansteuerung betreibbar sind.

Eine solche Konzeption weist zunächst einmal sämtliche vorteilhaften Eigenschaften auf, die auch beim Vorsehen einer Konzeption einer elektrischen Maschine nur mit einer mäanderförmigen Luftspaltwicklung im Sinne dieser Erfindung schon vorliegen.

Unter einem Eisenkern wird eine Einrichtung bestehend aus hochpermeablen Materialien unterschiedlicher Geometrie und Anordnung verstanden, die zur Rückkopplung des magnetischen Flusses dient. Dabei muss der Eisenkern nicht immer als ein massiver Eisenkörper ausgebildet sein. Im Primärteil wird er zur Reduktion von Wirbelströmen üblicherweise geblecht ausgeführt. Zur Reduktion des Gewichts der elektrischen Maschine kann der Eisenkern z.B. auch eine Einrichtung sein, die ein in Kunststoff eingebettetes Eisenpulver aufweist.

So können alle magnetischen Pole gleichzeitig zur Kraft- beziehungsweise Drehmomentbildung genutzt werden, wodurch ein großes Drehmoment entsteht.

Zur Führung des magnetischen Flusses im Inneren der Struktur wird nur vergleichsweise wenig Eisen benötigt, was zu einer sehr leichten Bauweise der Maschine genutzt werden kann.

Durch die Windungszahl 1 der mäanderförmigen Luftspaltwicklung wird darüber hinaus auch nur vergleichsweise wenig Kupfer benötigt, was Kosten reduziert und zu einer auch leichteren Bauweise führt.

Die direkte Auflage der Luftspaltwicklung auf den Stator kann zu einer exzellenten Kühlung der Luftspaltwicklung genutzt werden. Auch wird es dadurch möglich, sehr hohe Kräfte beziehungsweise Drehmomente zu übertragen,

Der benötigte Bauraum für die Kraft- und Drehmoment bildenden Teile ist demgegenüber recht klein, wodurch sehr kompakte Maschinen möglich werden.

Die erfindungsgemäße Konstruktion ermöglicht auch einen Aufbau einer recht einfachen Geometrie der elektrischen Maschine. Dadurch können die Fertigungskosten deutlich reduziert werden.

Da kein spürbarer Bereich einer Feldschwäche auftritt, kann die elektrische Maschine auch bei hohen Drehzahlen effizient eingesetzt werden.

Durch die erfindungsgemäßen zusätzlichen Maßnahmen wird jetzt in Ergänzung zur mäanderförmigen Luftspaltwicklung eine zweite Wicklung vorgenommen, die in das Primärteil, bevorzugt also in den Stator, integriert wird. In das Primärteil beziehungsweise in den Stator können Nuten eingebracht werden, welche dann zur Unterbringung einer Nutenwicklung genutzt werden. Dadurch kann die Leistungs- und Drehmomentdichte weiter gesteigert werden.

Diese Nutenwicklung nutzt den bereits aufgebauten magnetischen Kreis, um in besonders effektiver Form zusätzliche Kräfte und Drehmomente zu bilden. Die Anordnung und Bestromung der Nutenwicklung wird dabei so gewählt, dass bei einer maximalen Kraftausbeute der Nutenwicklung die Wirkung der Luftspaltwicklung möglichst wenig beeinflusst wird. Die Kräfte und Drehmomente lassen sich auf diese Weise gegenüber einer Konstruktion mit nur einer Luftspaltwicklung um 60 bis 80 % steigern, wie erste Versuche bereits gezeigt haben.

Auch das Leichtbaupotential der elektrischen Maschine ist sehr effektiv nutzbar. Gegenüber einer Konzeption ohne eine Nutenwicklung wird lediglich das Gewicht einer Nutenwicklung selbst hinzukommen, weitere Aggregate werden maschinenseitig nicht benötigt. Die Nutenwicklung kann bevorzugt mit einer Windungszahl 1 ausgeführt werden und kommt daher auch mit sehr wenig Kupfer aus. In einigen Ausführungsformen ist aber auch eine Windungszahl von >1 vorgesehen.

Insgesamt entsteht durch die Erfindung eine elektrische Maschine mit einem magnetischen Kreis, der für die elektromechanische Wandlung zwei unterschiedlich strukturierte Wicklungen verwendet. Es handelt sich zum einen um eine mäanderförmige Luftspaltwicklung, die sich auf der Oberfläche des Stator-Eisenrückschlusses befindet, und zum anderen um eine Nutenwicklung, die sich in eingebrachten Nuten des Stator-Eisenrückschlusses befindet. Beide Wicklungen werden zusammen verschaltet und wandeln gemeinsam eine Gesamtkraft bzw. ein Gesamtdrehmoment. Hierbei kommen zwei elektromechanische Wandlungsprinzipien zum Tragen. Für die Luftspaltwicklung gilt das allgemeine Lorentzsche Kraftgesetz für stromdurchflossene elektrische Leiter im magnetischen Feld und für die Nutenwicklung gilt die Magnetkraft zwischen den gebildeten Elektromagneten im Ständer bzw. Stator und den permanenterregten oder fremderregten Polen im Läufer bzw. Rotor.

Die erfindungsgemäßen elektrischen Maschinen sind sehr kompakt, leicht, effizient, dynamisch und insbesondere auch sehr drehmomentstark.

Die Modifikation gegenüber einer Konzeption, die nur eine Luftspaltwicklung aufweist, führt nur zu einer sehr geringen Steigerung des Fertigungsaufwandes und ist somit auf jeden Fall gerechtfertigt und effektiv. Im Hinblick auf das deutlich gesteigerte Drehmoment und die deutlich gesteigerte Leistung bei gleichzeitig sehr geringer Zunahme des Gewichts ist dieser Fertigungsaufwand auf jeden Fall gerechtfertigt.

Vorteil ist auch, dass auch mit dieser Modifikation weiterhin eine sehr einfache Geometrie und ein kompakter Bauraum gegeben ist.

Aufgrund dieser Eigenschaften können die erfindungsgemäßen elektrischen Maschinen insbesondere in allen Anwendungsbereichen eingesetzt werden, bei denen es auf diese Eigenschaften in besonderem Maße ankommt.

Dazu zählen unter anderem auch mobile Antriebssysteme wie beispielsweise Elektrofahrzeuge ganz allgemein, elektrische Nutzfahrzeuge, Elektrofahrräder, Elektroscooter, Elektroboote, Elektroschiffe oder Elektroflugzeuge. Bei allen derartigen Anwendungsfällen sind leichte elektrische Maschinen von Vorteil und ein kompakter Aufbau besonders gewünscht, da nur begrenzt Platz zur Verfügung steht. Gleichwohl müssen die einzusetzenden elektrischen Maschinen bei derartigen Systemen effizient und dynamisch sein.

Erfindungsgemäße elektrische Maschinen sind darüber hinaus sehr gut skalierbar. Aus diesem Grund kann ein weiter Leistungsbereich bei anpassbaren Abmessungen abgedeckt werden.

Vorteil ist es unter anderem auch, dass über ein regelmäßig ohnehin bereits verwendetes Kühlsystem dann auch eine Kühlung der Nutenwicklung ohne zusätzlichen apparativen Aufwand erfolgen kann.

Die charakteristischen Vorteile der beiden eingesetzten Wicklungsarten können im Betrieb vorteilhaft kombiniert werden. Es handelt sich dabei unter anderem darum, dass eine Luftspaltwicklung lediglich eine sehr geringe Feldschwächung verursacht, während eine Nutenwicklung eine Feldschwächung herbeiführen kann. Durch die Kombination kann dann je nach Wunsch eine Optimierung z.B. hinsichtlich eines maximalen Drehmoments oder aber hinsichtlich eines maximalen Wirkungsgrades vorgenommen werden. Weitere Ausführungsformen der Erfindung sind in den abhängigen Ansprüchen 2 - 15 definiert.

Von Vorteil ist es, wenn die Anzahl der Nuten der Nutenwicklung im Primärteil und die Anzahl der magnetischen Pole im Sekundärteil in einem beliebigen Verhältnis größer, kleiner oder gleich eins ausgeführt ist, und wenn der Positionsversatz der Wicklungsstränge in den Nuten relativ zur Position der Wicklungsstränge im Luftspalt sowie die Ansteuerung der Nutenwicklung entsprechend des gewählten Verhältnisses anpassbar ist. Durch diese Konzeption wird die erfindungsgemäße elektrische Maschine noch besser an unterschiedliche Anforderungen anpassbar.

Eine Möglichkeit für einen praktischen Einsatz einer erfindungsgemäßen elektrischen Maschine besteht darin, dass das Primärteil ein Stator ist, dass das Sekundärteil als ein Rotor ausgebildet ist, dass eine Achse vorgesehen ist, die als eine Rotationsachse ausgebildet ist, und dass das Sekundärteil auf ein Primärteil parallel zur Achse angeordnet ist.

Eine weitere Möglichkeit für eine praktische Anwendung entsteht dann, wenn das Primärteil ein Ständer ist, das Sekundärteil als ein Läufer ausgebildet ist, eine Achse vorgesehen ist, die als eine Schubachse ausgebildet ist, und das Sekundärteil parallel zum Primärteil und beide senkrecht zur Achse angeordnet sind.

Dabei ist es möglich, dass das Sekundärteil innerhalb des Primärteils als Innenläufer oder außerhalb des Primärteils als Außenläufer angeordnet ist.

Die magnetischen Pole können permanent oder fremderregbar sein. Anwendungsmöglichkeiten ergeben sich auch dadurch, dass die erfindungsgemäße elektrische Maschine als Gleichstrommaschine ausgebildet ist, wobei die Luftspaltwicklung und die Nutenwicklung gleichzeitig mit einer gepulsten Gleichspannung bzw. gepulsten elektrischen Gleichspannung ansteuerbar sind.

Eine andere Möglichkeit zeichnet sich dadurch aus, dass die elektrische Maschine als Wechselstrommaschine ausgebildet ist und dadurch, dass die Luftspaltwicklung und die Nutenwicklung mit einer Wechselspannung bzw. elektrischen Wechselspannung ansteuerbar sind, wobei die jeweils zugeführte Wechselspannung zueinander eine Phasenverschiebung aufweist.

Möglich ist es natürlich auch, die elektrische Maschine so aufzubauen, dass eine der beiden Wicklungen im Gleichstrombetrieb und die andere der beiden Wicklungen im Wechselstrombetrieb angesteuert wird.

Ein besonders praktischer Vorteil ist es, wenn das Primärteil als genuteter Vollzylinder oder als genuteter Hohlzylinder ausgebildet ist. Das Primärteil kann dabei die beiden Wicklungen beinhalten, die wiederrum individuelle Geometrien aufweisen können.

Alternativ ist es auch möglich, dass das Primärteil zumindest ein genutetes Zylinder- oder Hohlzylindersegment aufweist und das Sekundärteil als Hohlzylinder oder Hohlzylindersegment ausgeführt ist.

Eine besonders bevorzugte Ausführungsform der Erfindung besteht darin, dass die elektrischen Verbindungselemente der Luftspaltwicklung und die elektrischen Verbindungselemente der Nutenwicklung derart in Verbindung mit den Wicklungssträngen stehen, dass sie wechselseitig angeordnet sind, vorzugsweise in Mäanderform. Die Mäanderform hat sich als besonders zuverlässig, effizient und praktikabel herausgestellt.

Ferner ist es auch möglich, dass die elektrischen Verbindungselemente der Luftspaltwicklung und die elektrischen Verbindungselemente der Nutenwicklung derart in Verbindung mit den Wicklungssträngen stehen, dass sie räumlich entweder in der Ebene der Wicklungsstränge oder in einem beliebigen Winkel zur Ebene der Bewegungsrichtung angeordnet sind.

Denkbar ist es, dass die Wicklungsstränge der Luftspaltwicklung und/oder die Wicklungsstränge der Nutenwicklung ein- oder mehrteilig ausgebildet sind und einen Querschnitt aufweisen, der als ein Rechteck, Quadrat, Kreis oder Kreisringsegment ausgebildet ist.

Verschiedene Möglichkeiten gibt es auch für die Anordnung und Ausrichtung der Wicklungsstränge der Luftspaltwicklungen und die Wicklungsstränge der Nutenwicklung.

Diese können dabei parallel zur Rotationsachse und/oder senkrecht zur Schubachse ausgerichtet sein. Möglich ist es auch, Wicklungsstränge mittels der elektrischen Verbindungselemente an dem Primärteil zu befestigen und/oder zusammen mit den elektrischen Verbindungselementen einteilig auszubilden.

Auch die Luftspaltwicklung und/oder die Nutenwicklung selbst können zusammen mit dem Primärteil einteilig ausgebildet werden.

In einer weiteren Ausführungsform der Erfindung ist die Nutenwicklung mit einer Windungszahl größer als 1 ausgeführt.

Weitere Merkmale und vorteilhafte Gedanken der Erfindung sind in den Unteransprüchen sowie in der folgenden Figurenbeschreibung angegeben.

Im Folgenden werden anhand der Zeichnung einige Ausführungsbeispiele der Erfindung näher erläutert. Es zeigen:
- **Figur 1**: einen schematischen Schnitt durch eine erste Ausführungsform einer erfindungsgemäßen elektrischen Maschine;
- **Figur 2**: einen schematischen Schnitt durch eine zweite Ausführungsform einer erfindungsgemäßen elektrischen Maschine;
- **Figur 3**: ein vergrößertes Detail aus den Ausführungsformen aus den Figuren 1 oder 2 mit einem Schnitt im Bereich einer Nut;
- **Figur 4**: ein vergrößertes Detail aus den Ausführungsformen aus den Figuren 1 oder 2 betreffend den Positionsversatz im Bereich einer Nut;
- **Figur 5**: eine schematische Darstellung des Verlaufs einer Luftspaltwicklung in einer der Ausführungsformen aus den Figuren 1 oder 2;
- **Figur 6**: eine schematische Darstellung der Nutenwicklung in einer der Ausführungsformen aus den Figuren 1 oder 2;
- **Figur 7**: einen schematischen Schnitt durch eine weitere Ausführungsform einer erfindungsgemäßen elektrischen Maschine, hier mit einer Ausbildung als Innenläufer; und
- **Figur 8**: einen schematischen Schnitt durch eine vierte Ausführungsform einer erfindungsgemäßen elektrischen Maschine, hier mit einer Ausbildung als Außenläufer.

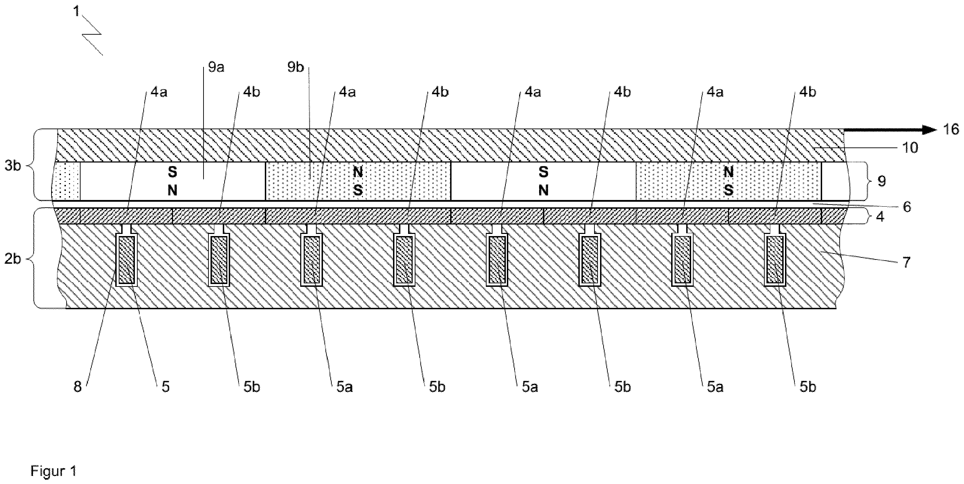

**Figur 1** zeigt schematisch den Aufbau einer ersten Ausführungsform einer erfindungsgemäßen elektrischen Maschine 1. Die elektrische Maschine 1 besitzt ein Primärteil 2b und ein Sekundärteil 3b. Der Primärteil 2b und der Sekundärteil 3b sind durch einen Luftspalt 6 voneinander getrennt.

Ferner sind eine Luftspaltwicklung 4 und eine Nutenwicklung 5 vorgesehen. Bei der dargestellten Ausführungsform handelt es sich um eine kombinierte Nuten-5 und Luftspaltwicklung 4 für eine lineare Anordnung. Das Primärteil 2b weist einen Eisenkern 7 als Eisenrückschluss, die Nutenwicklung 5 und die Luftspaltwicklung 4 auf. Der Eisenkern 7 oder Eisenrückschluss der elektrischen Maschine 1, hier also einer elektrischen Linearmaschine, ist ein genuteter Ständer. Der Eisenkern 7 weist mithin Nuten 8 auf. In die Nuten 8 des Eisenkerns 7 beziehungsweise Eisenrückschlusses ist exemplarisch eine zweiphasige 5a, 5b Nutenwicklung integriert/eingelegt. Auf die genutete Oberfläche des Eisenkerns 7 beziehungsweise Eisenrückschlusses ist exemplarisch eine zweiphasige 4a, 4b Luftspaltwicklung appliziert.

Das Sekundärteil 3b der elektrischen Maschine 1 beziehungsweise Linearmaschine ist ein Läufer. Dieser weist einen Eisenkern 10 beziehungsweise Eisenrückschluss und permanenterregte magnetische Pole 9 auf. Letztere sind auf der Oberfläche des Eisenkerns 10 beziehungsweise Eisenrückschlusses mit alternierender Polarisierung angeordnet. Die Polarisierung der in dieser Ausführungsform permanenterregten magnetischen Pole 9 wird durch N für einen Nordpol und S für einen Südpol definiert. Das Sekundärteil 3b kann entlang einer Achse, hier einer Schubachse 16, seine Position variieren.

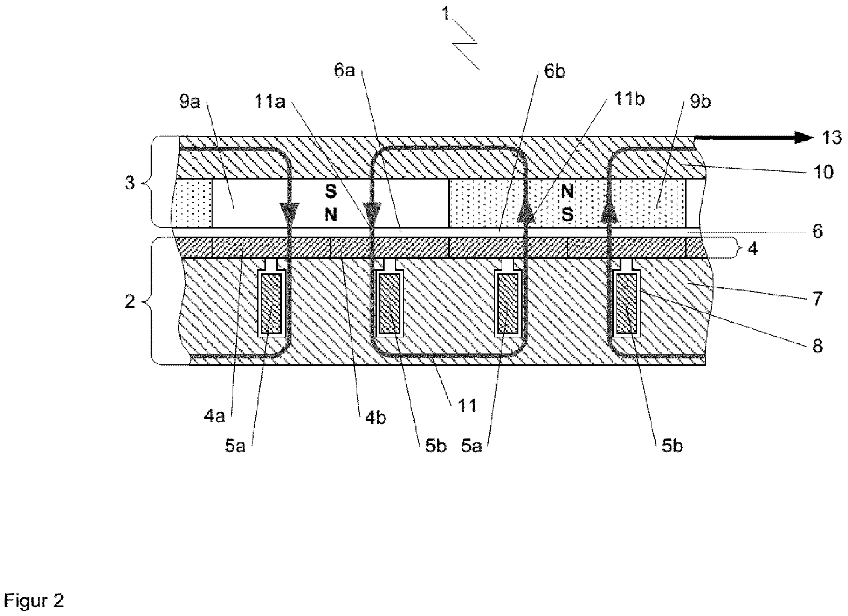

In der **Figur 2** ist schematisch in vergrößerter Darstellung eine Ausführungsform der erfindungsgemäßen elektrischen Maschine 1 dargestellt, welcher zwei Phasen 5a, 5b einer Nutenwicklung 5 und zwei Phasen 4a, 4b einer Luftspaltwicklung 4 miteinander kombiniert.

Dabei ist zur Verdeutlichung ein magnetischer Kreis 11 hervorgehoben. Dieser magnetische Kreis 11 erstreckt sich über den Eisenrückschluss oder Eisenkern 7, die zwei Phasen 4a, 4b der Luftspaltwicklung 4, einen ersten magnetisch wirksamem Luftspalt 6a, einen zweiten magnetisch wirksamem Luftspalt 6b, die sich im Luftspalt 6 befinden, der zwei Mal durch den magnetischen Kreis 11 überwunden wird, die magnetischen Pole 9a, 9b und den Eisenrückschluss oder Eisenkern 10 des Sekundärteils 3b.

Die Orientierung einer magnetischen Flussdichte innerhalb des Luftspaltes 6 wird für den magnetischen Kreis 11 durch die beiden Abschnitte 11a, 11b dargestellt.

In der Figur 2 ist darüber hinaus eine Ausführungsform dargestellt, in der der Eisenkern 7 beziehungsweise Eisenrückschluss des Primärteils 2 genutet ist. In die dadurch gebildeten Nuten 8 ist exemplarisch eine Nutenwicklung 5 mit zwei Phasen 5a, 5b integriert oder eingelegt. Auf die genutete Oberfläche des Eisenrückschlusses beziehungsweise Eisenkerns 7 des Primärteils 2 ist exemplarisch eine Luftspaltwicklung 4 ebenfalls mit zwei Phasen 4a. 4b appliziert.

Das Sekundärteil 3 ist durch den Eisenrückschluss beziehungsweise Eisenkern 10 und die zwei in dieser Ausführungsform permanenterregten magnetischen Pole 9a, 9b dargestellt. Die magnetischen Pole 9a, 9b sind auf der Oberfläche des Eisenkerns 10 mit einer alternierenden Polarisierung angeordnet. Die Polarisierung der permanenterregten magnetischen Pole 9 wird durch N einen Nordpol und S für einen Südpol definiert. Das Sekundärteil 3 kann entlang einer Bewegungsrichtung 13 seine Position variieren.

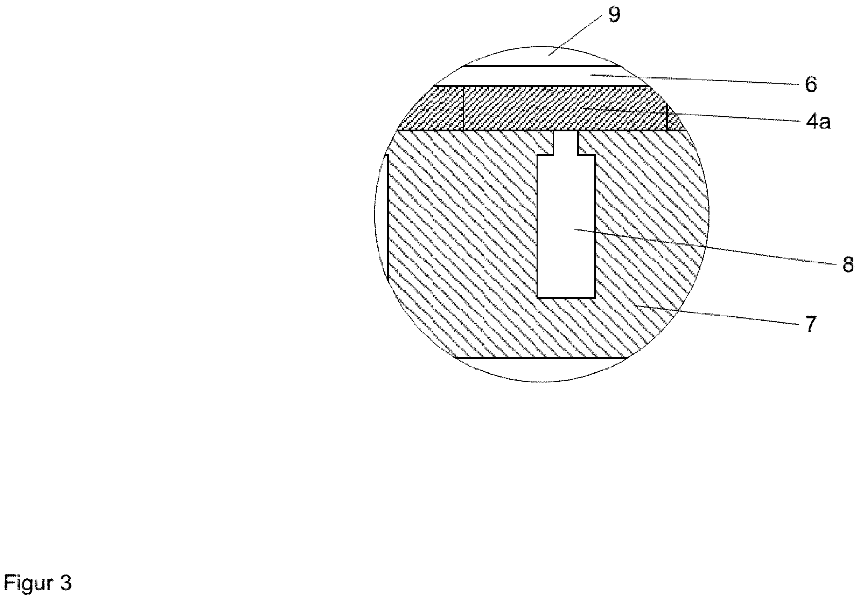

In der **Figur 3** ist schematisch in vergrößerter Darstellung eine Detailansicht eines Abschnittes einer elektrischen Maschine 1 wiedergegeben, die beispielsweise den Ausführungsformen aus den Figuren 1 oder 2 entspricht. Die Detailansicht zeigt insbesondere eine Nut 8 im Eisenkern 7 beziehungsweise Eisenrückschluss des Primärteils 2b. Die dabei konkret dargestellte Geometrie der Nut 8 ist lediglich eine von zahlreichen möglichen Ausführungsformen. Darüber hinaus zeigt die Figur 3 einen Wicklungsstrang der Phase 4a der Luftspaltwicklung 4. Zwischen dem magnetischen Pol 9 des Sekundärteils 3b und dem Primärteil 2b kann man gut den Luftspalt 6 erkennen.

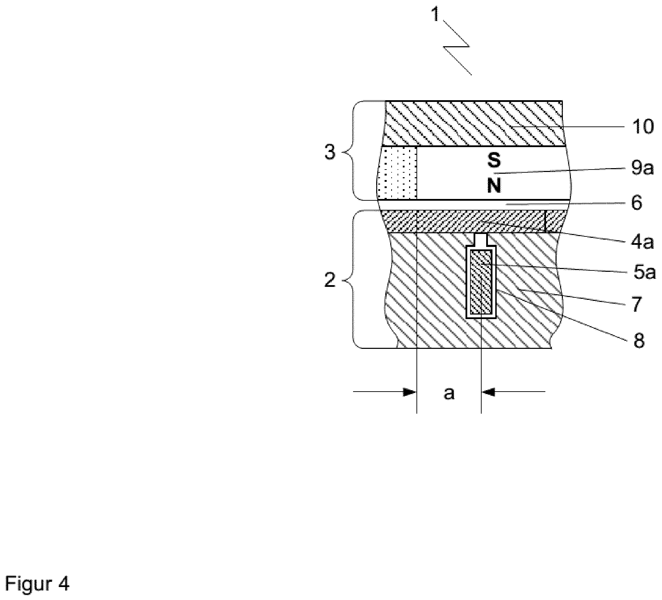

In der **Figur 4** ist in einer weiteren Detaildarstellung in vergrößerter Form ein Positionsversatz a zwischen der Phase 5a der Nutenwicklung 5 in der Nut 8 und der Phase 4a der Luftspaltwicklung 4 zu erkennen, wobei sich diese Darstellung ebenfalls auf die Ausführungsformen aus den Figuren 1 oder 2 beziehen kann. Darüber hinaus zeigt die Figur 4 das Primärteil 2 und das Sekundärteil 3 der elektrischen Maschine 1. Im Primärteil 2 sind der Eisenkern 7 beziehungsweise Eisenrückschluss, die Nut 8, ein Wicklungsstrang der Phase 5a der Nutenwicklung 5 und ein Wicklungsstrang der Phase 4a der Nutenwicklung 4 abgebildet. Im Sekundärteil 3 sind der Eisenkern 10 beziehungsweise Eisenrückschluss und der magnetische Pol 9a abgebildet. Auch hier sieht man zwischen dem Primärteil 2 und dem Sekundärteil 3 den Luftspalt 6.

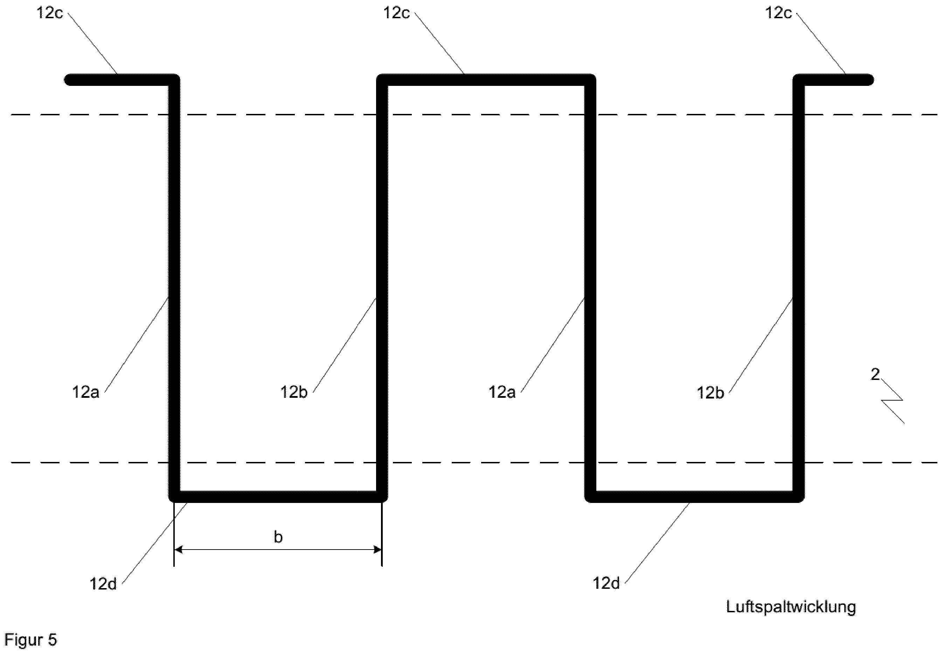

Die **Figur 5** zeigt schematisch den Verlauf der Luftspaltwicklung 4 auf dem Primärteil 2. Die Luftspaltwicklung 4 besteht aus den Wicklungssträngen 12a, 12b und alternierenden Kopfstücken 12c, 12d. Eine Breite b kennzeichnet die Breite eines magnetischen Pols 9. Die Kopfstücke 12c, 12d befinden sich außerhalb des Luftspaltes 6 und werden alternierend mit den Wicklungssträngen 12a, 12b der Luftspaltwicklung 4, welche sich innerhalb des Luftspaltes 6 befinden, verbunden.

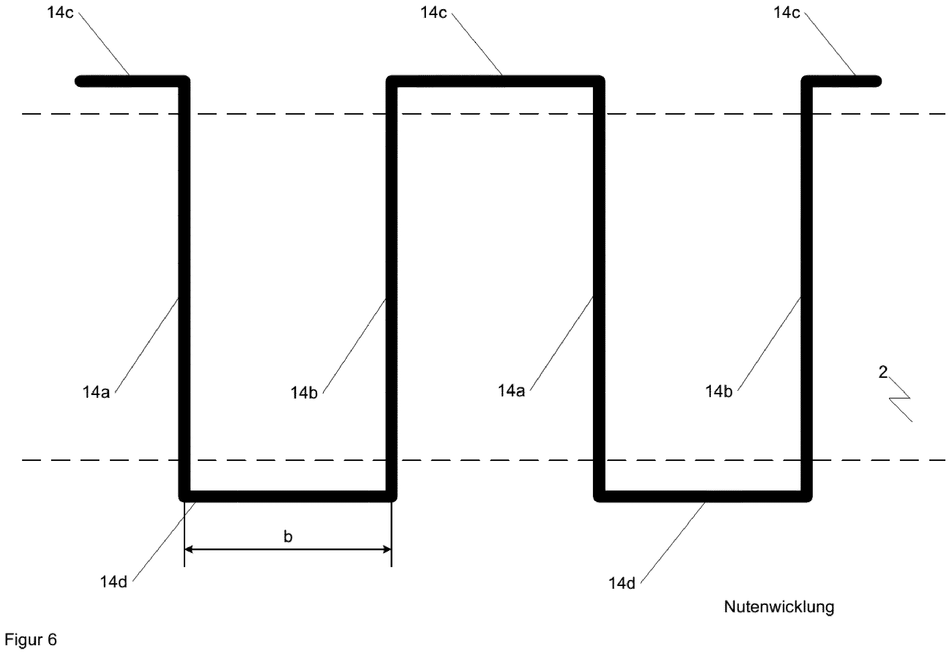

Die **Figur 6** zeigt schematisch den Verlauf der Nutenwicklung 5 auf dem Primärteil 2. Die Nutenwicklung 5 besteht aus Wicklungssträngen 14a, 14b und alternierenden Kopfstücken 14c, 14d. Die Breite b kennzeichnet wiederum die Breite eines magnetischen Pols 9. Die Kopfstücke 14c, 14d werden alternierend mit den Wicklungssträngen 14a, 14b der Nutenwicklung 4, welche sich in den Nuten 8 des Primärteils 2 befinden, verbunden.

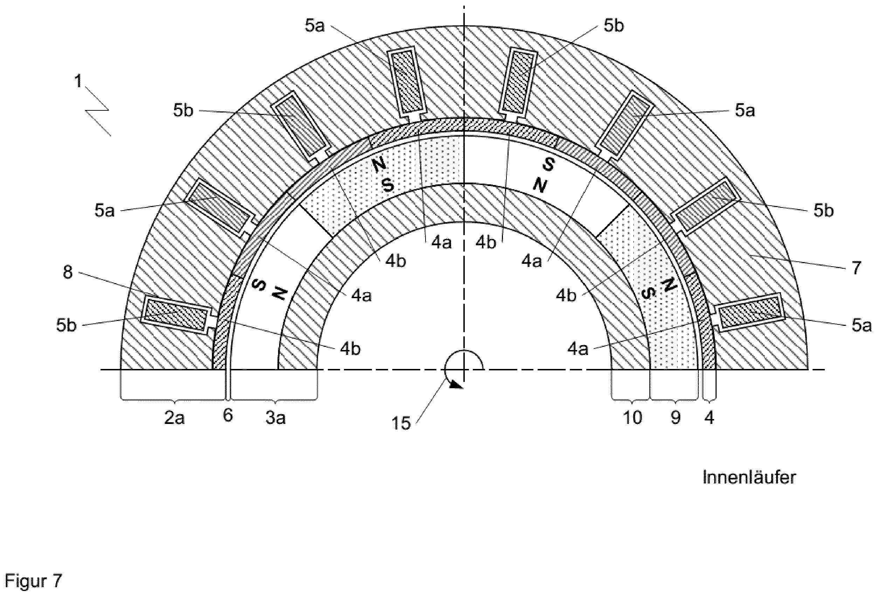

**Figur 7** zeigt schematisch den Aufbau einer weiteren Ausführungsform einer erfindungsgemäßen elektrischen Maschine 1. Die elektrische Maschine 1 besitzt ein Primärteil 2b und ein Sekundärteil 3b. Der Primärteil 2b und der Sekundärteil 3b sind durch einen Luftspalt 6 voneinander getrennt.

Ferner sind eine Luftspaltwicklung 4 und eine Nutenwicklung 5 vorgesehen. Bei der dargestellten Ausführungsform handelt es sich um eine kombinierte Nuten-5 und Luftspaltwicklung 4 für eine elektrische Rotationsmaschine. Das Primärteil 2a weist einen Eisenkern 7 als Eisenrückschluss, die Nutenwicklung 5 und die Luftspaltwicklung 4 auf. Der Eisenkern 7 oder Eisenrückschluss der elektrischen Maschine 1, hier also einer elektrischen Rotationsmaschine, ist ein genuteter Stator. Der Eisenkern 7 weist mithin Nuten 8 auf. In die Nuten 8 des Eisenkerns 7 beziehungsweise Eisenrückschlusses ist exemplarisch eine zweiphasige 5a, 5b Nutenwicklung integriert/eingelegt. Auf die genutete Oberfläche des Eisenkerns 7 beziehungsweise Eisenrückschlusses ist exemplarisch eine zweiphasige 4a, 4b Luftspaltwicklung appliziert.

Das Sekundärteil 3a der elektrischen Maschine 1 beziehungsweise Rotationsmaschine ist ein Rotor. Dieser weist einen Eisenkern 10 beziehungsweise Eisenrückschluss und permanenterregte magnetische Pole 9 auf. Letztere sind auf der Oberfläche des Eisenkerns 10 beziehungsweise Eisenrückschlusses mit alternierender Polarisierung angeordnet. Die Polarisierung der in dieser Ausführungsform permanenterregten magnetischen Pole 9 wird durch N für einen Nordpol und S für einen Südpol definiert. Das Sekundärteil 3b kann als Rotor um eine Achse, hier eine Rotationsachse 15, rotieren. In der Figur 7 ist dabei eine Ausführungsform als Innenläufer dargestellt.

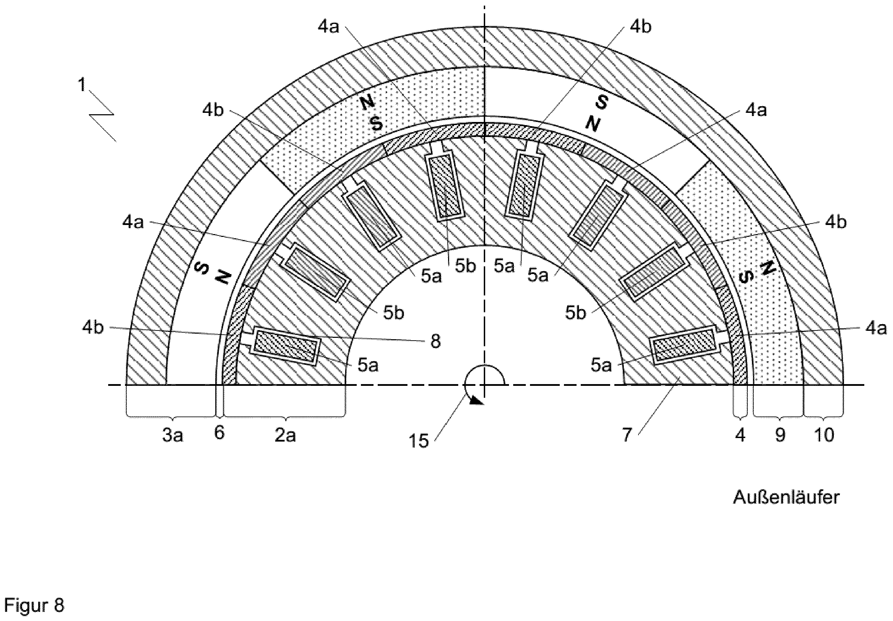

In der **Figur 8** ist eine vierte Ausführungsform einer elektrischen Maschine 1 dargestellt. Die Ausführungsform entspricht in der Mehrzahl der dargestellten Elemente der Ausführungsform aus der Figur 7. Die Ausführungsform in der Figur 8 unterscheidet sich von der Ausführungsform in der Figur 7 dadurch, dass eine elektrische Rotationsmaschine mit einem Stator als Primärteil 2a und einem Rotor als Sekundärteil 3a abgebildet ist, die miteinander einen Außenläufer bilden.

### Bezugszeichenliste

- 1: Elektrische Maschine
- 2: Primärteil
- 2a: Stator
- 2b: Ständer
- 3: Sekundärteil
- 3a: Rotor
- 3b: Läufer
- 4: Luftspaltwicklung
- 4a, 4b: Phasen der Luftspaltwicklung
- 5: Nutenwicklung
- 5a, 5b: Phasen der Nutenwicklung
- 6: Luftspalt
- 6a, 6b: Luftspalte des magnetischen Kreises
- 7: Eisenkern des Primärteils 2
- 8: Nuten
- 9: Magnetische Pole
- 9a, 9b: Magnetpolpaar
- 10: Eisenkern des Sekundärteils 3
- 11: Magnetischer Kreis
- 11a, 11b: Magnetische Flussdichte im Luftspalt
- 12a, 12b: Wicklungsstrang Luftspaltwicklung
- 12c, 12d: Alternierendes Kopfstück Luftspaltwicklung
- 13: Bewegungsrichtung
- 14a, 14b: Wicklungsstrang Nutenwicklung
- 14c, 14d: Alternierendes Kopfstück Nutenwicklung
- 15.: Rotationachse
- 16.: Schubachse
- a: Positionsversatz
- b: Breite eines magnetischen Pols 9
- N: Nordpol
- S: Südpol

## Patentansprüche

1. Elektrische Maschine (1),
**mit** einem Primärteil (2) mit einem ersten Eisenkern (7),
**mit** einem Sekundärteil (3) mit einem zweiten Eisenkern (10),
**mit** einem Luftspalt (6) zwischen dem Primärteil (2) und dem Sekundärteil (3),
**mit** einer Luftspaltwicklung (4) im Luftspalt (6), die zumindest zwei Phasen (4a, 4b) umfasst und direkt auf dem ersten Eisenkern (7) des Primärteils (2) angeordnet ist,
**mit** magnetischen Polen (9), die alternierend auf dem zweiten Eisenkern (10) des Sekundärteils (3) angeordnet sind,
mit jeweils einem lokalen magnetischen Kreis (11), der sich jeweils über einem Paar der magnetischen Pole (9a, 9b), dem Eisenkern (10) im Sekundärteil (3), zweimal dem Luftspalt (6) zwischen den beiden Magneten des Paares der magnetischen Pole (9a, 9b) und dem Eisenkern (7) im Primärteil (2) bildet,
**wobei** die Luftspaltwicklung (4) derart zu den magnetischen Polen (9) angeordnet ist, dass für jeden magnetischen Pol (9) und für jede Phase (4a, 4b) jeweils ein Wicklungsstrang (12a, 12b) im Luftspalt (6) liegt und zwar senkrecht zu einer magnetischen Flussdichte (11a, 11b) im Luftspalt (6) und auch senkrecht zu einer Bewegungsrichtung (13) des Sekundärteils (3), **wobei** parallel zueinander laufende direkt benachbarte Wicklungsstränge (12a, 12b) einer Phase (4a, 4b) der Luftspaltwicklung (4) im Luftspalt (6) durch beidseitig alternierende Kopfstücke (12c, 12d) zu je einem Leiter verbunden werden,
**wobei** die Kopfstücke (12c, 12d) derart mit den Wicklungssträngen (12a, 12b) in Verbindung stehen, dass sie wechselseitig in Mäanderform angeordnet sind,
**wobei** das Primärteil (2) zusätzlich mit einer Nutenwicklung (5) versehen ist,
**wobei** die Nutenwicklung (5) zumindest zwei Phasen (5a, 5b) umfasst und in Nuten (8) des Eisenkerns (7) des Primärteils (2) angeordnet ist,
**wobei** die Nutenwicklung (5) derart zu den magnetischen Polen (9) angeordnet ist, dass für die Nutenwicklung (5) für jeden magnetischen Pol (9a, 9b) und für jede Phase (5a, 5b) jeweils ein Wicklungsstrang (14a, 14b) parallel zum Wicklungsstrang (12a, 12b) der dem gleichen magnetischen Pol (9a, 9b) zugeordneten Luftspaltwicklung (4) in der Nut (8) liegt, **wobei** parallel zueinander laufende direkt benachbarte Wicklungsstränge (14a, 14b) einer Phase (5a, 5b) der Nutenwicklung (5) in einer Nut (8) durch beidseitig alternierende Kopfstücke (14c, 14d) zu je einem Leiter verbunden werden,
**wobei** die Kopfstücke (14c, 14d) derart mit den Wicklungssträngen (14a, 14b) in Verbindung stehen, dass sie wechselseitig in Mäanderform angeordnet sind, und
**wobei** die Wicklungsstränge (12a, 12b) der ersten Phase (4a) der Luftspaltwicklung (4) und die Wicklungsstränge (14a, 14b) der ersten Phase (5a) der Nutenwicklung (5) einen durch die Phasenzahlen bestimmten Positionsversatz (a) zueinander aufweisen und die Luftspaltwicklung (4) und die Nutenwicklung (5) durch eine wechselseitig auf die Position des magnetischen Poles (9) synchronisierte Ansteuerung betreibbar sind.

2. Elektrische Maschine (1) nach Anspruch 1,
**dadurch gekennzeichnet,**
**dass** die Anzahl der Nuten (8) der Nutenwicklung (5) im Primärteil (2) und die Anzahl der magnetischen Pole (9) im Sekundärteil (3) in einem beliebigen Verhältnis größer, kleiner oder gleich eins ausgeführt ist, und **dass** der Positionsversatz (a) der Wicklungsstränge (14a, 14b) in den Nuten (8) relativ zur Position der Wicklungsstränge (12a, 12b) im Luftspalt (6) sowie die Ansteuerung der Nutenwicklung (5) entsprechend des gewählten Verhältnisses anpassbar ist.

3. Elektrische Maschine (1) nach Anspruch 1 oder 2,
**dadurch gekennzeichnet,**
**dass** das Primärteil (2) ein Stator (2a) ist,
**dass** das Sekundärteil (3) als ein Rotor (3a) ausgebildet ist,
**dass** eine Achse (15) vorgesehen ist, die eine Rotationsachse ist, und
**dass** das Sekundärteil (3) auf einem Primärteil (2) parallel zur Achse (15) angeordnet ist.

4. Elektrische Maschine (1) nach Anspruch 1 oder 2,
**dadurch gekennzeichnet,**
**dass** das Primärteil ein Ständer (2b) ist,
**dass** das Sekundärteil als ein Läufer (3b) ausgebildet ist,
**dass** eine Achse (16) vorgesehen ist, die eine Schubachse ist, und
**dass** das Sekundärteil (3) parallel zum Primärteil (2b) und beide senkrecht zur Achse (16) angeordnet sind.

5. Elektrische Maschine (1) nach Anspruch 3,
**dadurch gekennzeichnet,**
**dass** das Sekundärteil (3) innerhalb des Primärteils (2) als Innenläufer oder außerhalb des Primärteils (2) als Außenläufer angeordnet ist.

6. Elektrische Maschine (1) nach einem der vorhergehenden Ansprüche,
**dadurch gekennzeichnet,**
**dass** die magnetischen Pole (9) permanent oder fremderregbar sind.

7. Elektrische Maschine (1) nach einem der vorhergehenden Ansprüche,
**gekennzeichnet durch** die Ausbildung als Gleichstrommaschine und **dadurch, dass** die Luftspaltwicklung (4) und die Nutenwicklung (5) gleichzeitig mit einer gepulsten Gleichspannung ansteuerbar sind.

8. Elektrische Maschine (1) nach einem der vorhergehenden Ansprüche 1 bis 6,
**gekennzeichnet durch** die Ausbildung als Wechselstrommaschine und **dadurch, dass** die Luftspaltwicklung (4) und die Nutenwicklung (5) mit einer Wechselspannung ansteuerbar sind, wobei die jeweils zugeführte Wechselspannung zueinander eine Phasenverschiebung aufweist.

9. Elektrische Maschine (1) nach einem der vorhergehenden Ansprüche,
**dadurch gekennzeichnet,**
**dass** eine der beiden Wicklungen (4 oder 5) im Gleichstrombetrieb und die andere der beiden Wicklungen (4 oder 5) im Wechselstrombetrieb angesteuert wird.

10. Elektrische Maschine (1) nach einem der vorhergehenden Ansprüche, wenn rückbezogen auf Anspruch 3,
**dadurch gekennzeichnet,**
**dass** das Primärteil (2) als genuteter Vollzylinder oder als genuteter Hohlzylinder ausgebildet ist.

11. Elektrische Maschine (1) nach einem der vorhergehenden Ansprüche, wenn rückbezogen auf Anspruch 3,
**dadurch gekennzeichnet,**
**dass** das Primärteil (2) zumindest ein genutetes Zylinder- oder Hohlzylindersegment aufweist und
**dass** das Sekundärteil (3) als Hohlzylinder oder Hohlzylindersegment ausgeführt ist.

12. Elektrische Maschine (1) nach einem der vorhergehenden Ansprüche,
**dadurch gekennzeichnet,**
**dass** die elektrischen Verbindungselemente (12c, 12d) der Luftspaltwicklung (4) und die elektrischen Verbindungselemente (14c, 14d) der Nutenwicklung (5) derart in Verbindung mit den Wicklungssträngen (12a, 12b; 14a, 14b) stehen, dass sie räumlich entweder in der Ebene der Wicklungsstränge oder in einem beliebigen Winkel zur Ebene der Bewegungsrichtung angeordnet sind.

13. Elektrische Maschine (1) nach einem der vorhergehenden Ansprüche, **dadurch gekennzeichnet,**
**dass** die Wicklungsstränge (12a, 12b) der Luftspaltwicklung (4) und die Wicklungsstränge (14a, 14b) der Nutenwicklung (5) ein- oder mehrteilig ausgebildet sind und einen Querschnitt aufweisen, die als ein Rechteck, Quadrat, Kreis oder Kreisringsegment ausgebildet sind.

14. Elektrische Maschine (1) nach einem der vorhergehenden Ansprüche, **dadurch gekennzeichnet,**
**dass** die Wicklungsstränge (12a, 12b) der Luftspaltwicklung (4) und die Wicklungsstränge (14a, 14b) der Nutenwicklung (5) parallel zur Rotationsachse (15) und/oder senkrecht zur Schubachse (16) ausgerichtet sind und/oder mittels der elektrischen Verbindungselemente (12c, 12d, 14c, 14d) an dem Primärteil (2) befestigt sind und/oder zusammen mit den elektrischen Verbindungselementen (12c, 12d, 14c, 14d) einteilig ausgebildet sind.

15. Elektrische Maschine (1) nach einem der vorhergehenden Ansprüche, **dadurch gekennzeichnet,**
**dass** die Nutenwicklung (5) mit einer Windungszahl größer als 1 ausgeführt ist.

## Claims

1. Electrical machine (1),
having a primary part (2) comprising a first iron core (7),
having a secondary part (3) comprising a second iron core (10),
having an air gap (6) between the primary part (2) and the secondary part (3),
having an air gap winding (4) in the air gap (6), which winding comprises at least two phases (4a, 4b) and is arranged directly on the first iron core (7) of the primary part (2),
having magnetic poles (9) which are arranged alternately on the second iron core (10) of the secondary part (3),
having a respective local magnetic circuit (11) which is formed by means of a pair of the magnetic poles (9a, 9b), the iron core (10) in the secondary part (3), twice through the air gap (6) between the two magnets of the pair of magnetic poles (9a, 9b) and the iron core (7) in the primary part (2),
**wherein** the air gap winding (4) is arranged relative to the magnetic poles (9) in such a manner that, for each magnetic pole (9) and for each phase (4a, 4b), a respective winding strand (12a, 12b) lies in the air gap (6), namely, perpendicularly to a magnetic flux density (11a, 11b) in the air gap (6) and also perpendicularly to a direction of movement (13) of the secondary part (3),
**wherein** mutually parallel, directly neighbouring winding strands (12a, 12b) of a phase (4a, 4b) of the air gap winding (4) in the air gap (6) are connected by head pieces (12c, 12d) which alternate at both ends to form a respective conductor,
**wherein** the head pieces (12c, 12d) are connected to the winding strands (12a, 12b) such that they are arranged in alternating manner in meandering form,
**wherein** the primary part (2) is provided additionally with a slot winding (5),
**wherein** the slot winding (5) comprises at least two phases (5a, 5b) and is arranged in slots (8) of the iron core (7) of the primary part (2),
**wherein** the slot winding (5) is arranged relative to the magnetic poles (9) in such a manner that, for the slot winding (5) for each magnetic pole (9a, 9b) and for each phase (5a, 5b), a respective winding strand (14a, 14b) parallel to the winding strand (12a, 12b) of the air gap winding (4) that is associated with the same magnetic pole (9a, 9b) lies in the slot (8),
**wherein** mutually parallel, directly neighbouring winding strands (14a, 14b) of a phase (5a, 5b) of the slot winding (5) in a slot (8) are connected by head pieces (14c, 14d) which alternate at both ends to form a respective conductor,
**wherein** the head pieces (14c, 14d) are connected to the winding strands (14a, 14b) so that they are arranged in alternating manner in meandering form, and
**wherein** the winding strands (12a, 12b) of the first phase (4a) of the air gap winding (4) and the winding strands (14a, 14b) of the first phase (5a) of the slot winding (5) exhibit a positional offset (a) relative to each other which is determined by the numbers of phases and the air gap winding (4) and the slot winding (5) are operable by a control arrangement that is synchronized alternately to the position of the magnetic pole (9).

2. An electrical machine (1) in accordance with Claim 1,
**characterized in**
**that** the number of slots (8) of the slot winding (5) in the primary part (2) and the number of magnetic poles (9) in the secondary part (3) is implemented in an optional ratio that is greater than, smaller than or equal to one, and **in that** the positional offset (a) of the winding strands (14a, 14b) in the slots (8) relative to the position of the winding strands (12a, 12b) in the air gap (6) as well as the control of the slot winding (5) is adaptable in correspondence with the selected ratio.

3. An electrical machine (1) in accordance with Claim 1 or 2, **characterized in**
**that** the primary part (2) is a stator (2a),
**that** the secondary part (3) is in the form of a rotor (3a),
**that** an axis (15) is provided which is a rotational axis, and
**in that** the secondary part (3) is arranged on a primary part (2) parallel to the axis (15).

4. An electrical machine (1) in accordance with Claim 1 or 2,
**characterized in**
**that** the primary part is a stator (2b),
**that** the secondary part is in the form of an armature (3b),
**that** an axis (16) is provided which is a thrust axis, and
**that** the secondary part (3) is parallel to the primary part (2b) and both are arranged perpendicularly to the axis (16).

5. An electrical machine (1) in accordance with Claim 3,
**characterized in**
**that** the secondary part (3) is arranged within the primary part (2) as an internal armature or outside the primary part (2) as an external armature.

6. An electrical machine (1) in accordance with any of the preceding Claims, **characterized in**
**that** the magnetic poles (9) are permanent or externally excitable.

7. An electrical machine (1) in accordance with any of the preceding Claims, **characterized by** its construction as a direct current machine and
**in that** the air gap winding (4) and the slot winding (5) are controllable simultaneously by a pulsed direct voltage.

8. An electrical machine (1) in accordance with any of the preceding Claims 1-6,
**characterized by** its construction as an alternating current machine and
**in that** the air gap winding (4) and the slot winding (5) are controllable by an alternating voltage, wherein the respectively supplied alternating voltage has a mutual phase shift.

9. An electrical machine (1) in accordance with any of the preceding Claims, **characterized in**
**that** one of the two windings (4 or 5) is controlled in the direct current mode of operation and the other one of the two windings (4 or 5) is controlled in the alternating current mode of operation.

10. An electrical machine (1) in accordance with any of the preceding Claims, when referred back to claim 3,
**characterized in**
**that** the primary part (2) is in the form of a slotted solid cylinder or a slotted hollow cylinder.

11. An electrical machine (1) in accordance with any of the preceding Claims, when referred back to claim 3,
**characterized in**
**that** the primary part (2) comprises at least one slotted cylinder segment or hollow cylinder segment and
**that** the secondary part (3) is implemented as a hollow cylinder or hollow cylinder segment.

12. An electrical machine (1) in accordance with any of the preceding Claims, **characterized in**
**that** the electrical connecting elements (12c, 12d) of the air gap winding (4) and the electrical connecting elements (14c, 14d) of the slot winding (5) are connected to the winding strands (12a, 12b; 14a, 14b) in such a manner that they are either arranged spatially in the plane of the winding strands or at an optional angle to the plane of the direction of movement.

13. An electrical machine (1) in accordance with any of the preceding Claims, **characterized in**
**that** the winding strands (12a, 12b) of the air gap winding (4) and the winding strands (14a, 14b) of the slot winding (5) are formed in one or multiple parts and have a cross section which is in the form of a rectangle, a square, a circle or a ring segment.

14. An electrical machine (1) in accordance with any of the preceding Claims, **characterized in**
**that** the winding strands (12a, 12b) of the air gap winding (4) and the winding strands (14a, 14b) of the slot winding (5) are oriented parallel to the rotational axis (15) and/or perpendicularly to the thrust axis (16) and/or are fixed to the primary part (2) by means of the electrical connecting elements (12c, 12d, 14c, 14d) and/or are formed in one-piece together with the electrical connecting elements (12c, 12d, 14c, 14d).

15. An electrical machine (1) in accordance with any of the preceding Claims, **characterized in**
**that** the slot winding (5) is implemented with a number of turns greater than 1.

## Revendications

1. Machine électrique (1),
avec une partie primaire (2) avec un premier noyau de fer (7),
avec une partie secondaire (3) avec un deuxième noyau de fer (10),
avec un entrefer (6) entre la partie primaire (2) et la partie secondaire (3),
avec un enroulement d'entrefer (4) dans l'entrefer (6), qui comprend au moins deux phases (4a, 4b) et est disposé directement sur le premier noyau de fer (7) de la partie primaire (2),
avec des pôles magnétiques (9), qui sont disposés en alternance sur le deuxième noyau de fer (10) de la partie secondaire (3),
avec respectivement un circuit magnétique local (11), qui est formé respectivement au-dessus d'une paire des pôles magnétiques (9a, 9b), du noyau de fer (10) dans la partie secondaire (3), à deux reprises de l'entrefer (6) entre les deux aimants de la paire des pôles magnétiques (9a, 9b) et du noyau de fer (7) dans la partie primaire (2),
dans lequel l'enroulement d'entrefer (4) est disposé de telle manière par rapport aux pôles magnétiques (9) que pour chaque pôle magnétique (9) et pour chaque phase (4a, 4b), respectivement un faisceau d'enroulement (12a, 12b) se situe dans l'entrefer (6), à savoir de manière perpendiculaire par rapport à une densité de flux magnétique (11a, 11b) dans l'entrefer (6) et également de manière perpendiculaire par rapport à la direction de déplacement (13) de la partie secondaire (3),
dans lequel des faisceaux d'enroulement (12a, 12b), directement adjacents, s'étendant de manière parallèle les uns par rapport aux autres, d'une phase (4a, 4b) de l'enroulement d'entrefer (4) sont reliés dans l'entrefer (6) par des pièces de tête (12c, 12d) en alternance de part et d'autre en respectivement un conducteur,
dans lequel les pièces de tête (12c, 12d) sont reliées de telle manière aux faisceaux d'enroulement (12a, 12b) qu'elles sont disposées réciproquement en une forme sinueuse,
dans lequel la partie primaire (2) est pourvue en supplément d'un enroulement de rainure (5),
dans lequel l'enroulement de rainure (5) comprend au moins deux phases (5a, 5b) et est disposé dans des rainures (8) du noyau de fer (7) de la partie primaire (2),
dans lequel l'enroulement de rainure (5) est disposé de telle manière par rapport aux pôles magnétiques (9) que pour l'enroulement de rainure (5) pour chaque pôle magnétique (9a, 9b) et pour chaque phase (5a, 5b), respectivement un faisceau d'enroulement (14a, 14b) se situe dans la rainure (8) de manière parallèle par rapport au faisceau d'enroulement (12a, 12b) de l'enroulement d'entrefer (4) associé au même pôle magnétique (9a, 9b),
dans lequel des faisceaux d'enroulement (14a, 14b), directement adjacents, s'étendant de manière parallèle les uns par rapport aux autres, d'une phase (5a, 5b) de l'enroulement de rainure (5) sont reliés dans une rainure (8) par des pièces de tête (14c, 14d), en alternance de part et d'autre, en respectivement un conducteur,
dans lequel les pièces de tête (14c, 14d) sont reliées de telle manière aux faisceaux d'enroulement (14a, 14b) qu'elles sont disposées réciproquement en une forme sinueuse, et
dans lequel les faisceaux d'enroulement (12a, 12b) de la première phase (4a) de l'enroulement d'entrefer (4) et les faisceaux d'enroulement (14a, 14b) de la première phase (5a) de l'enroulement de rainure (5) présentent un décalage de position (a) défini par les nombres de phases les unes par rapport aux autres et l'enroulement d'entrefer (4) et l'enroulement de rainure (5) peuvent fonctionner par un pilotage synchronisé réciproquement sur la position du pôle magnétique (9).

2. Machine électrique (1) selon la revendication 1,
**caractérisée en ce**
**que** le nombre des rainures (8) de l'enroulement de rainure (5) dans la partie primaire (2) et le nombre des pôles magnétiques (9) dans la partie secondaire (3) sont, selon une proportion quelconque, supérieurs, inférieurs ou égaux à un, et
**que** le décalage de position (a) des faisceaux d'enroulement (14a, 14b) dans les rainures (8) par rapport à la position des faisceaux d'enroulement (12a, 12b) dans l'entrefer (6) ainsi que le pilotage de l'enroulement de rainure (5) peuvent être adaptés conformément à la proportion choisie.

3. Machine électrique (1) selon la revendication 1 ou 2,
**caractérisée en ce**
**que** la partie primaire (2) est un stator (2a),
**que** la partie secondaire (3) est réalisée en tant qu'un rotor (3a),
**qu'**est prévu un axe (15), qui est un axe de rotation, et
**que** la partie secondaire (3) est disposée sur une partie primaire (2) de manière parallèle par rapport à l'axe (15).

4. Machine électrique (1) selon la revendication 1 ou 2,
**caractérisée en ce**
**que** la partie primaire est un support (2b),
**que** la partie secondaire est réalisée en tant qu'un induit (3b),
**qu'**est prévu un axe (16), qui est un axe de poussée, et
**que** la partie secondaire (3) est disposée de manière parallèle par rapport à la partie primaire (2b) et ces deux parties sont disposées de manière perpendiculaire par rapport à l'axe (16).

5. Machine électrique (1) selon la revendication 3,
**caractérisée en ce**
**que** la partie secondaire (3) est disposée à l'intérieur de la partie primaire (2) en tant qu'induit intérieur ou à l'extérieur de la partie primaire (2) en tant qu'induit extérieur.

6. Machine électrique (1) selon l'une quelconque des revendications précédentes,
**caractérisée en ce**
**que** les pôles magnétiques (9) sont permanents ou peuvent être excités de manière extérieure.

7. Machine électrique (1) selon l'une quelconque des revendications précédentes,
**caractérisée par** la réalisation en tant que machine à courant continu et
en ce que l'enroulement d'entrefer (4) et l'enroulement de rainure (5) peuvent être pilotés de manière simultanée avec une tension continue puisée.

8. Machine électrique (1) selon l'une quelconque des revendications précédentes 1 à 6,
**caractérisée par** la réalisation en tant que machine à courant alternatif et en ce que l'enroulement d'entrefer (4) et l'enroulement de rainure (5) peuvent être pilotés avec une tension alternative, dans laquelle la tension alternative respectivement amenée présente l'une par rapport à l'autre un décalage de phases.

9. Machine électrique (1) selon l'une quelconque des revendications précédentes,
**caractérisée en ce**
**qu'**un des deux enroulements (4 ou 5) est piloté lors du fonctionnement en courant continu et l'autre des deux enroulements (4 ou 5) est piloté lors du fonctionnement en courant alternatif.

10. Machine électrique (1) selon l'une quelconque des revendications précédentes, si elle se rapporte à la revendication 3,
**caractérisée en ce**
**que** la partie primaire (2) est réalisée en tant que cylindre plein rainuré ou en tant que cylindre creux rainuré.

11. Machine électrique (1) selon l'une quelconque des revendications précédentes, si elle se rapporte à la revendication 3,
**caractérisée en ce**
**que** la partie primaire (2) présente au moins un segment de cylindre ou un segment de cylindre creux rainuré, et
**que** la partie secondaire (3) est réalisée en tant que cylindre creux ou en tant que segment de cylindre creux.

12. Machine électrique (1) selon l'une quelconque des revendications précédentes,
**caractérisée en ce**
**que** les éléments de liaison électriques (12c, 12d) de l'enroulement d'entrefer (4) et les éléments de liaison électriques (14c, 14d) de l'enroulement de rainure (5) sont reliés de telle manière aux faisceaux d'enroulement (12a, 12b ; 14a, 14b) qu'ils sont disposés spatialement soit dans le plan des faisceaux d'enroulement soit selon un angle quelconque par rapport au plan de la direction de déplacement.

13. Machine électrique (1) selon l'une quelconque des revendications précédentes,
**caractérisée en ce**
**que** les faisceaux d'enroulement (12a, 12b) de l'enroulement d'entrefer (4) et les faisceaux d'enroulement (14a, 14b) de l'enroulement de rainure (5) sont réalisés en une ou en plusieurs parties et présentent une section transversale, lesquelles sont réalisées en tant qu'un rectangle, un carré, un cercle ou un segment d'anneau circulaire.

14. Machine électrique (1) selon l'une quelconque des revendications précédentes,
**caractérisée en ce**
**que** les faisceaux d'enroulement (12a, 12b) de l'enroulement d'entrefer (4) et les faisceaux d'enroulement (14a, 14b) de l'enroulement de rainure (5) sont orientés de manière parallèle par rapport à l'axe de rotation (15) et/ou de manière perpendiculaire par rapport à l'axe de poussée (16) et/ou sont fixés sur la partie primaire (2) au moyen des éléments de liaison électriques (12c, 12d, 14c, 14d) et/ou sont réalisés en une partie conjointement avec les éléments de liaison électriques (12c, 12d, 14c, 14d).

15. Machine électrique (1) selon l'une quelconque des revendications précédentes,
**caractérisée en ce**
**que** l'enroulement de rainure (5) est réalisé avec un nombre de spires supérieur à 1.
